# EUROPEAN PATENT APPLICATION

(11) **EP 1 096 288 A2**
(43) Date of publication of application: **02.05.2001**
(21) Application number: 00304318.9
(22) Date of filing: 22.05.2000
(51) Int. Cl.: G02B 23/12, G02B 27/01

(54) **Solid state image intensifier for viewing device**

(30) Priority: 15.10.1999 GB 9924385
(71) Applicant: BAE Systems Electronics Ltd., Stanmore, Middlesex HA7 4LY (GB)
(72) Inventor: Bartlett, Christopher Travers, Maidstone, Kent ME16 9EH (GB)
(74) Representative: Hoste, Colin Francis

(57) **Abstract**

An image intensifier apparatus 30 has an objective lens assembly 31 arranged to collect available infra-red light from a scene 32 and to focus the light onto an input surface 33 of a solid state device 34. The surface 33 of the device 34 is arranged substantially normal to a first optical axis 35 extending longitudinally through the apparatus 30. The device 34 is a piezolectric device or a charge coupled device arranged to utilise the high intrinsic sensitivity of semi-conductor material to photon irradiation.

The device 34 produces a signal in response to photons emitted from scene 32 that impinge on the surface 33. A processor 36 connected to the device 34 receives the signal from the device and generates a visual signal corresponding to the signal which is displayed on the display 39. The processor 36 can perform filtering, amplification functions or signal to noise enhancement, as well as other functions, on the signal.

## Description

The present invention relates to image intensifier apparatus, a method of intensifying an image, monocular, binocular and biocular night vision apparatus for enabling a user to view a scene and a method of enabling a user to view a night scene.

The primary function of an aircrew helmet is to protect its user. Night vision devices and helmet mounted displays are now an important element of the cockpit display system providing information such as aircraft attitude and status to a user, typically a pilot of the aircraft. However, the advent of night vision devices and helmet mounted displays places additional constraints on the helmet. Development of a helmet mounted display is a demanding task if operational benefits are to be realised without affecting user safety.

Night vision goggles are a primary means of providing enhanced vision at night. The drive to introduce an integrated helmet mounted display has resulted in a desire to combine the function of the night vision goggles with that of the helmet mounted display. In many applications this can be achieved by adapting current in service night vision goggles with the addition of a display device, such as a miniature cathode ray tube, to provide a display of symbology superimposed upon a night scene as viewed through the night vision goggles. Some night vision goggles and helmet mounted display combinations use a helmet visor as a display surface to reflect symbology to the user which is overlaid on a night scene viewed by the user through the visor whilst others utilise combiner eyepieces in front of the user's eye or eyes such that the user views symbology superimposed on a night scene through the combiner. In a further prior art system, symbology is optically coupled with light from an image intensifier tube using an optical mixer and the mixed light and symbology is viewed by the user either through a combiner eyepiece or a helmet visor.

Night vision goggles use available light in the red and infrared spectrum from sources such as the stars, moon and the night sky, intensified sufficiently to be presented to the user's eye as a visible image. All night vision goggles operate on the same basic principle and use image intensifier tubes to produce a bright monochromatic electro-optical image of the night scene in light conditions where the unaided user's eye can see little or nothing. The human visual perception system is optimised to operate in daylight illumination conditions, that is the visual spectrum which extends from approximately 420 nanometres to 700 nanometres, with the region of greatest sensitivity near the peak wavelength of sunlight at around 550 nanometres. However, at night, far fewer visible light photons are available and normally only large, high contrast objects are visible to the human visual perception system. Fine detail and low contrast objects are not resolvable by the human visual perception system as its photoreceptors must receive a large number of photons in the visual spectrum to register an image. In a night sky the photon rate is greater in the infrared spectrum, especially from 800 to 900 nanometres, than in the visible region, around 500 nanometres. Also reflectivities increase in the infrared spectrum, for example, the reflectivity of green vegetation is four times greater between 800 nanometres and 900 nanometres than at 500 nanometres. Therefore, at night, more light is available in the infrared spectrum than in the visual spectrum and against certain backgrounds, notably green vegetation, more contrast is available.

Typically, an image intensifier provides a means of taking advantage of this situation by effectively amplifying the available infrared light and translating the amplified light so as to present to a user an intensified image that is sufficiently bright and in the visual spectrum.

It will be understood that the infrared spectrum for the purposes of this specification, includes that portion of the visual spectrum at the limit of the red region, sometimes known as the near infrared region as well as the true infrared region, from the limit of the red end of the visual spectrum to the beginning of the microwave spectrum, that is respectively approximately from 730 nanometres to one millimetre in wavelength.

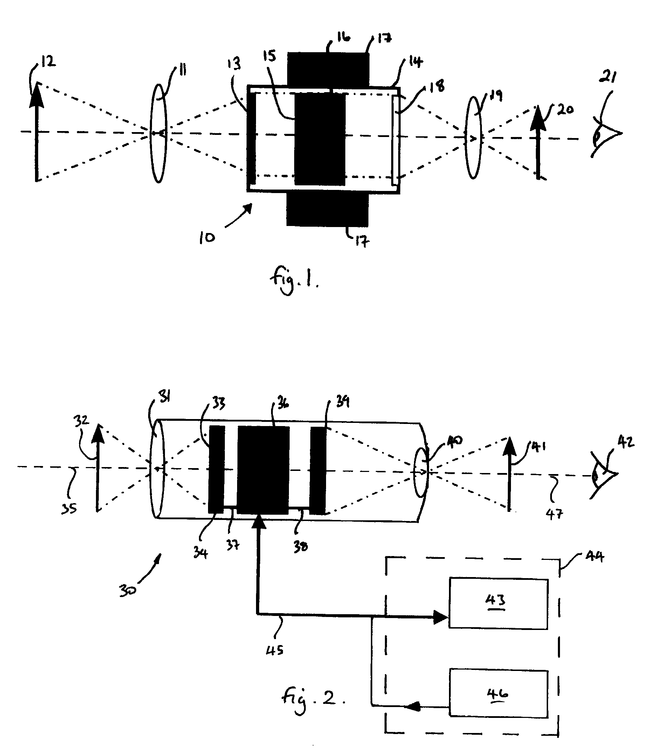

Figure 1, illustrates a typical prior art image intensifier apparatus 10, comprising an objective lens assembly 11 arranged to collect available infrared light from a scene 12, in this case indicated by an arrow, and to focus the infrared light onto an input surface 13 of an image intensifier tube 14. The image intensifier tube 14 is an evacuated electron tube used to intensify light from a faint scene 12. Light from the scene 12 falls on a photocathode 15 in such a manner that electrons are emitted by the photoelectric effect. Emitted electrons are accelerated by an electric field section 16 generated by a high voltage power supply 17 arranged around the electric field section 16. The accelerated electrons are focused onto a positively charged fluorescent screen 18 which emits light in response to being struck by the accelerated electrons. The emitted light produced by the fluorescent screen 18, which is many times brighter than the original image 12, is collected by an eyepiece lens assembly 19, which also focuses an intensified image 20, in this case indicated by an arrow, onto the eye 21 of a user.

In some devices, the emitted light from by the fluorescent screen 18, that is the intensified image 20, can be made to fall on a second photocathode such that the intensification process can be repeated. Several image intensifiers can be linked in this way to form a multistage device so as to amplify further the available light from the night scene.

A concern when using night vision goggles as a clip-on accessory to existing flying helmets is that, in general, most current helmets were not initially designed for such applications and they have been adapted to facilitate the fitting of the night vision goggles. Typically this combination induces user fatigue resulting from an increased head-supported mass and poor centre of gravity. Furthermore, the user's safety can also be compromised, particularly during ejection from an aircraft, accordingly the night vision goggles may need to be removed prior to ejection from the aircraft.

It is an object of the present invention to obviate or mitigate the disadvantages associated with the prior art.

According to a first aspect of the invention, an image intensifier apparatus comprises a solid state device arranged to receive an image of a scene on an input surface and in operation to produce an intensified signal which represents an intensified image of the scene, a processor arranged to receive the intensified signal and to produce a visual signal corresponding to the intensified signal, and a display arranged to receive the visual signal and to produce a visual image representative of the intensified image of the scene.

The inventor has realised that a solid state device is sensitive to infrared light and that this property makes it suitable to be used in place of a conventional image intensifier tube. In this manner, the image intensifier apparatus is render smaller and lighter with respect to a conventional image intensifier apparatus which incorporates an image intensifier tube and an associated high voltage power supply. Furthermore, a solid state device has a greater sensitivity than that of an image intensifier tube according to the prior art. Therefore, a solid state device provides better resolution of a scene detected by the device, especially a night scene.

According to a second aspect of the invention, an image intensifier apparatus comprises a solid state infrared device arranged to receive an image of a scene on an input surface and in operation to produce a signal which represents an intensified image of the scene, a processor arranged to receive the signal and to produce a visual signal corresponding to the signal, and a display arranged to receive the visual signal and to produce a visual image representative of the intensified image of the scene.

The inventor has realised that a solid state infrared device is suitable to be used in place of a conventional image intensifier tube. In this manner, the image intensifier apparatus is render smaller and lighter with respect to a conventional image intensifier apparatus which incorporates an image intensifier tube and an associated high voltage power supply. Furthermore, a solid state infrared device has a greater sensitivity than that of an image intensifier tube according to the prior art. Therefore, a solid state infrared device provides better resolution of a scene detected by the device, especially a night scene.

The solid state infrared device may be a charge coupled infrared device.

Preferably, an objective lens assembly may be arranged to focus the image of the scene along a first optical axis substantially normal to the input surface of the solid state infrared device. An eyepiece lens assembly may be arranged to convey the visual image to an eye of a user along a second optical axis. The first and second optical axes may be parallel and may be coaxial.

The display may be a flat panel liquid crystal display. The flat panel liquid crystal display may be back illuminated or may be an emissive display, such as a field emission, Active Matrix Organic Light Emitting Diode or electroluminescent type display.

The display may be arranged to have a variable intensity. In this manner, a user may vary the intensity of the visual image viewed, which is advantageous when the user wishes to maintain night vision without the aid of the image intensifier apparatus.

Preferably, the processor may be arranged to overlay an information signal over the visual signal. Furthermore, tracker apparatus may be arranged to determine the direction of the first optical axis and to conform the information signal with the visual signal. The information signal may be symbology and/or video information.

A second display may be arranged remote from the solid state infrared device, the processor and the display, and the processor may be arranged to transmit the visual signal to the second display. A second processor may be arranged remote from the solid state infrared device, the processor and the display, the second processor being arranged to transmit an information signal to the processor which is arranged to receive the information signal and overlay the information signal over the visual signal.

The image intensifier apparatus may be arranged to be mounted on to a helmet. In this manner, the lighter image intensifier apparatus can be arranged to have a better centre of gravity when mounted to the helmet thereby reducing the loading of the helmet and apparatus on the neck of a user wearing the helmet. The smaller image intensifier apparatus may also be incorporated with a helmet rather than as an attachment to a standard helmet. Furthermore, ejecting from an aircraft may be possible for the user while wearing a helmet incorporating the apparatus.

Preferably, the scene may be a night scene.

The solid state infrared device may be arranged to produce a colour signal, the processor may arranged to produce a colour visual signal and the display may be arranged to produce a colour visual image representative of the intensified image of the scene. Alternatively, the solid state infrared device may be arranged to produce a monochromatic signal, the processor may be arranged to produce a synthetic colour visual signal and the display may be arranged to produce a colour visual image corresponding to the intensified image of the scene.

The solid state infrared device and the display may be housed in the same unit and fixing means may be arranged to fix the spatial relationship between the solid state infrared device and the display.

According to a third aspect of the invention, a method of intensifying an image comprises receiving an image of a scene on an input surface of a solid state device and producing an intensified signal representing an intensified image of the scene, producing a corresponding visual signal from the intensified signal, and receiving the visual signal and producing a visual image representative of the intensified image of the scene on a display.

According to a fourth aspect of the invention, a method of intensifying an image comprises receiving an image of a scene on an input surface of a solid state infrared device and producing a signal representing an intensified image of the scene, producing a corresponding visual signal from the signal, and receiving the visual signal and producing a visual image representative of the intensified image of the scene on a display.

According to a fifth aspect of the invention, a monocular night vision apparatus for enabling a user to view a scene comprises an objective lens assembly arranged to focus an image of the scene along an optical axis through the apparatus, a solid state infrared device arranged substantially normal to the optical axis and to receive the image on an input surface and in operation to produce a signal which represents an intensified image of the scene, a processor arranged to receive the signal and to produce a visual signal corresponding to the signal, a display arranged to receive the visual signal and to produce a visual image representative of the intensified image of the scene, and an eyepiece lens assembly arranged to convey the visual image to an eye of the user.

According to a sixth aspect of the invention, a binocular night vision apparatus for enabling a user to view a scene comprises a pair of optical channels, one for each eye of a user, each channel including an objective lens assembly arranged to focus an image of the scene along an optical axis through the apparatus, a solid state infrared device arranged substantially normal to the optical axis and to receive the image on an input surface and in operation to produce a signal which represents an intensified image of the scene, a processor arranged to receive the signal from the solid state device and to produce a visual signal corresponding to the signal, a display arranged to receive the visual signal from the processor and to produce a visual image representative of the intensified image of the scene, and an eyepiece lens assembly arranged to convey the visual image to its respective eye of the user.

According to a seventh aspect of the invention, a biocular night vision apparatus for enabling a user to view a scene comprises an objective lens assembly arranged to focus an image of the scene along an optical axis through the apparatus, a solid state infrared device arranged substantially normal to the optical axis and to receive the image on an input surface and in operation to produce a signal which represents an intensified image of the scene, a processor arranged to receive the signal from the solid state device and to produce a visual signal corresponding to the signal, a display arranged to receive the visual signal from the processor and to produce a visual image representative of the intensified image of the scene, and a pair of eyepiece assemblies, one for each eye of the user, arranged to convey the intensified visual image to its respective eye of the user.

According to an eighth aspect of the invention, a method of enabling a user to view a night scene comprises focusing an image of the scene onto an input surface of a solid state device and producing an intensified signal representing the image, producing a corresponding visual signal from the intensified signal, receiving the visual signal and producing a visual image representative of the intensified image of the scene on a display, and conveying the visual image to an eye of the user using an eyepiece lens assembly.

According to a ninth aspect of the invention, a method of enabling a user to view a night scene comprises focusing an image of the scene onto an input surface of a solid state infrared device and producing a signal representing the image, producing a corresponding visual signal from the signal, receiving the visual signal and producing a visual image representative of the intensified image of the scene on a display, and conveying the visual image to an eye of the user using an eyepiece lens assembly.

The invention will now be described, by way of example only, with reference to the accompanying drawings, in which:
Figure 1 is an illustration of a prior art image intensifier apparatus;
Figure 2 illustrates an image intensifier apparatus according to the present invention;
Figure 3 illustrates a spectral response of a solid state device against a conventional image intensifier tube;
Figure 4 schematically illustrates, in side elevation, an apparatus arranged to superimpose an intensified image onto a scene observed by a user;
Figure 5 schematically illustrates, in side elevation, an alternative embodiment to that illustrated in Figure 4, and
Figure 6 schematically illustrates, in side elevation, a further alternative embodiment to that illustrated in Figure 4.

In Figure 2, an image intensifier apparatus 30 comprises an objective lens assembly 31 arranged to collect available infrared light from a scene 32, in this case indicated by an arrow, and to focus the infrared light onto an input surface 33 of a solid state device 34. The input surface 33 of the solid state device 34 is arranged substantially normal to a first optical axis 35 extending longitudinally through the apparatus 30.

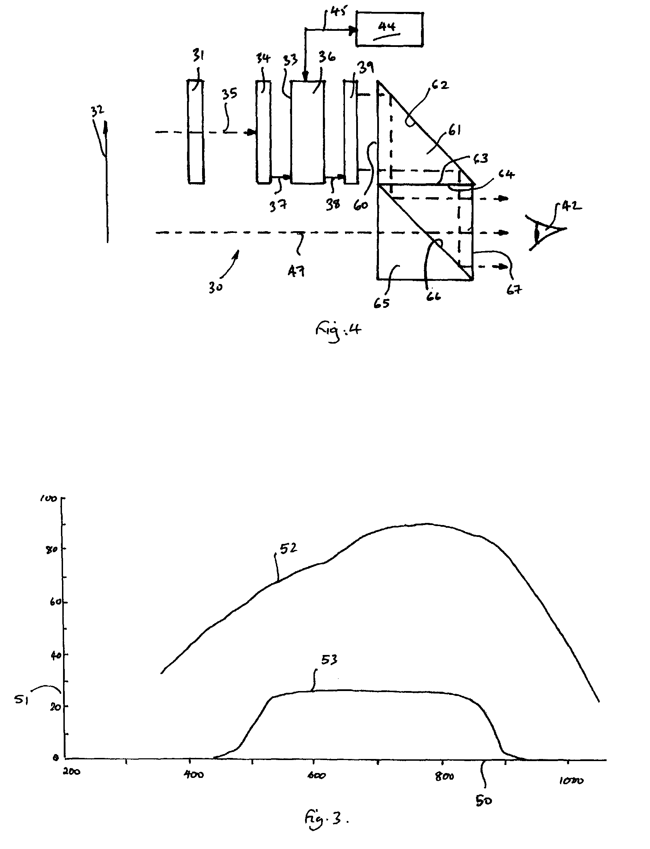

The solid state device 34 is a pixelated device or a charge coupled device arranged to utilise the high intrinsic sensitivity of semiconductor material, such as silicon, to photon irradiation. As illustrated in Figure 3, wherein wavelength in nanometres is indicated along the abscissa axis 50 and the percentage quantum efficiency is given along the ordinate axis 51, the efficiency of a solid state device, illustrated as graph 52, is greater than that achieved by a typical prior art image intensifier tube, as indicated by graph 53, over the range including both the visual spectrum and the infrared spectrum. The graph 52 corresponding to the solid state device indicates that the device will utilise more photons emitted from a scene 32 and that the device is capable of detecting photons in more of the infrared spectrum than that achievable with a conventional image intensifier tube, indicated by graph 53. That is the solid state device has a broader spectral response covering both the visual and infrared spectrums and the device is more sensitive to photons over the spectral response than conventional image intensifier tubes.

As the solid state device 34 is responsive over the visual and infrared spectrums, a cut off filter, not illustrated, can be inserted between the objective lens assembly 31 and the input surface 33 of the device 34, such that the visual spectrum is prohibited from impinging on the input surface 33. In this manner, visual light, for example, from cockpit instrumentation, can be inhibited from impinging on the device 34, thereby ensuring the user only views light emitted by the night scene 32. The cut off filter is arranged to operate at the lower end of the infrared spectrum, approximately 730 nanometres. Alternatively, no cut off filter need be inserted in the apparatus 30, as described above, or the cut off filter can be arranged to be readily removable, if the apparatus 30 are to operate so as to detect daylight and night scenes 32.

The solid state device 34 produces a signal in the form of a digital data stream in response to photons emitted from the scene 32 impinging on the input surface 33 of the solid state device 34. An input of a processor 36 is operably connected to an output of the solid state device 34 with a connection 37 so as to receive the signal generated by the solid state device 34.

The processor 36 processes the signal and generates a visual signal corresponding to the signal on an output connection 38 which is operably connected to a display 39. It will be understood that the processor 36 can perform filtering and amplification functions or signal to noise enhancement, as well as other functions, on the signal.

The display 39 is arranged to emit light in the form of a visual image representing the visual signal. The emitted light from the display 39 is collected and focused by an eyepiece lens assembly 40 and focused to form a visual image 41, in this case represented by an arrow. The visual image 41 which represents an intensified image of the scene 32 is focused onto and is observable by an eye 42 of a user.

The display 39 may be a liquid crystal display panel which is either transmissive and illuminated with an associated backlight or preferably can be an emissive display such as an electroluminescent display.

It will be understood that the apparatus 30 can also provide a means of prohibiting undesirable light sources from passing through the apparatus 30 as there is no direct optical path from the objective lens assembly 31 to the eyepiece lens assembly 40.

A conventional image intensifier apparatus, as described with reference to Figure 1, only creates a green visual image as this has been deemed the best colour for the human visual perception system to distinguish contrasts in different elements in the scene to be viewed. However, presenting a green visual image to the eye of the user temporarily impairs the night vison of the eye of the user when the prior art apparatus are removed from the eye. In the present invention, the processor 36 can be arranged to produce a multispectral visual signal on connection 38 such that a colour visual signal is received by the display 39 which is arranged to produce a colour image 41. In this case, if a true colour solid state device 34 is used then a true colour image 41 can be produced and observed by the eye 42 of the user. Alternatively, if a monochromatic solid state device 34 is used then specific colours can be assigned to specific intensities of the visual signal such that the display 39 will produce a synthetic colour image 41 which is conveyed to the eye 42 of the user. Furthermore, a synthetic red visual image 41 can be conveyed to the eye 42 as this form of visual image has been found least likely to impair the night vision of the eye 42 once the image intensifier apparatus 30 have been removed from the eye 42 by the user.

The image intensifier apparatus 30 can also have a luminance control, not illustrated, wherein the intensity of the visual image 41 emitted by the display 39 can be increased or decreased to suit the needs of the eye 42 of the user. This feature can also allow the user to maintain night vision of the eye 42 as the user may decrease the luminance of the visual image 41 prior to removing the apparatus from the eye 42, so as to allow the eye 42 to adjust more readily to a night scene 32. This is in contrast with a conventional image intensifier tube, in which, at least theoretically, the luminance of the display can be varied by altering the voltage across the tube. However, this has the effect of altering the resolution of the visual image produced by the tube for viewing by the eye of a user as the resolution of the visual image is a function of the voltage across the tube. Therefore, in practice, the voltage across the prior art tube is set at a maximum in order to produce the best possible resolution. In the present invention, the luminance of the display 39 can be varied without effecting the resolution of the visual image 41, as the display 39 does not form part of the solid state device 34 and accordingly the resolution is not a function of the voltage across the display 39. Therefore altering the voltage applied to the display 39 will not effect the voltage applied to the solid state device 34 and hence the resolution generated by the solid state device 34 will not be compromised.

An advantage of using the embodiment as a monocular apparatus as shown in Figure 2 is that no scintillation of the visual image is perceived by the user. Such scintillation of the visual image is usually present when an image intensifier tube according to the prior art is used in a monocular apparatus.

Furthermore, the processor 36 can be also operably connected to a second display 43, which may be located remote from the processor 36, for example, at a central command location 44, and the processor 36 can be arranged to transmit the visual signal to the second display 43, via a connection 45 between the processor 36 and the second display 43. In this manner, further users may view the visual image at the central command location 44 or at another remote location, Furthermore, a second processor 46, located remote from the processor 36, for example, at the central command location 44, can be arranged to transmit an information signal to the processor 36 via the connection 45. The processor 36 can be arranged to overlay the information signal on the visual signal and to convey the signals to the display 39, such that the eye 42 can view the visual image 41 overlaid with information from an external source, in this case the second processor 46 at the central command centre or some other remote location. It will be understood that a plurality of processors 36 and/or command centres and/or remote locations can be connected via their respective connections 45 and in this manner a plurality of users can be directed by an information signal from one or more command centres or visual signal can be transmitted to one or more command centres from one or more processors 36 so as to provide greater situation awareness at the command centre of conditions encountered by each user of the apparatus 30.

It will be understood that the visual image 41 generated by the display 40 is directed along a second optical axis 47 to an eye 42 of the user. The second optical axis 47 can extend longitudinally through the apparatus 30 and can be coaxial with the first optical axis 35. Alternatively, the second optical axis 47 can be arranged in a non coaxial configuration with respect to the first optical axis 35 in order to allow the apparatus 30 to be reduced in length or to minimise the optical elements required to convey the visual image 41 to the eye 42.

The apparatus 30 can also be cooled, for example using Peltier cooling techniques, such that any heat generated by the apparatus 30 is not readily detectable by other forms of image intensifier apparatus nor another apparatus 30 according to the present invention.

In Figure 4, in which like references have been used to indicate similar integers to those illustrated in Figure 2, an alternative image intensifier apparatus 30 comprises an objective lens 31 arranged to collect available infrared light from a scene 32, and to focus the infrared light onto the input surface 33 of a solid state device 34. The input surface 33 of the solid state device 34 is arranged substantially normal to a first optical axis 35 extending longitudinally through the apparatus 30. The solid state device 34 produces a signal in the form of a digital data stream in response to photons emitted from the scene 32 that impinge on the input surface 33. An input of a processor 36 is operably connected to an output of the solid state device 34 with a connection 37, so as to receive the signal generated by solid state device 34. The processor 36 processes the signal and generates a visual signal corresponding to the signal on an output connection 38 that is operably connected to a display 39. Alternatively, the processor 36 can transmit the visual signal to a remote display or receive an information signal from a remote processor, either being based at a remote command centre 44, via connection 45 as previously described.

The display 39 is arranged to emit light in the form of a visual image 41 representing the visual signal. Emitted light from the display 39 is projected into an input surface 60 of a prism 61 that is arranged to reflect the visual image from a reflective surface 62, which is located in a plane at substantially 45° to the first optical axis 35, to an output surface 63. The prism 61 is manufactured from an optically transparent material to allow transmission of the visual image and the reflective surface 62 can be silvered or have a dielectric coating thereon so as to reflect the visual image internally of the prism 61.

The visual image leaves the prism 61 via the output surface 63 and impinges on an input surface 64 of a combiner 65. The visual image is again reflected from a reflective surface 66, which is in a plane parallel to the reflective surface 62, so as to reflect the visual image to an output surface 67 and along the second optical axis 47, which is parallel to, but no coaxial with, the first optical axis 35, to the eye 42 of a user. The reflective surface 66 of the combiner 65 can be semi-silvered so as to allow the eye 42 of the user to view the scene 32 through the semi-silvered reflective surface 65 and also to view the visual image, reflected by the reflective surface 65, overlaid on the scene 32.

Alternatively, the reflective surface 66 can be formed from a dielectric coating. In this manner, the eye 42 views the scene 32 through the combiner 41 and the visual image, which represents an intensified image of the scene 32, appears to be overlay the scene 32.

In Figure 5, wherein like references have again been used to indicate similar integers to those illustrated in Figures 2 and 4, an alternative image intensifier apparatus 30 as previously described, comprises a display 39 that obviates the need for prism 61 as illustrated in Figure 4. In this embodiment, the display 39 has been rotated through substantially 90° such that the visual image produced by the display 39 is generated in a plane which can be reflected to the eye 42 of a user by a suitable combiner 70. In this embodiment, the visual image generated by display 39 passes to the combiner 70 through an input surface 71. The combiner 70 has a first reflective surface 72 to internally reflect the visual image onto a second reflective surface 73 that further internally reflects the visual image through an output surface 74 and along the second optical axis 47 to the eye 42 of a user. Again the first and second optical axes 35 and 37 are substantially parallel but are not coaxial. It will be understood, that the first reflective surface 72 can be semi-silvered or a dielectric coating and arranged to allow light at a specific angle to pass therethrough whilst reflecting light not at a specific angle towards the second surface 73. Reflective surface 73 can be semi-silvered or a dielectric coating and reflects the visual image towards the first reflective surface 72 whist allowing the eye 42 to view the scene 32 through the surface thereof. The first reflective surface 72 allows the visual image to pass therethrough and exit the combiner 70 via an output surface 74. Again, the eye 42 of the user views the scene 32 through the combiner 70 and the scene 32 appears to be overlaid with an intensified visual image of the image 32.

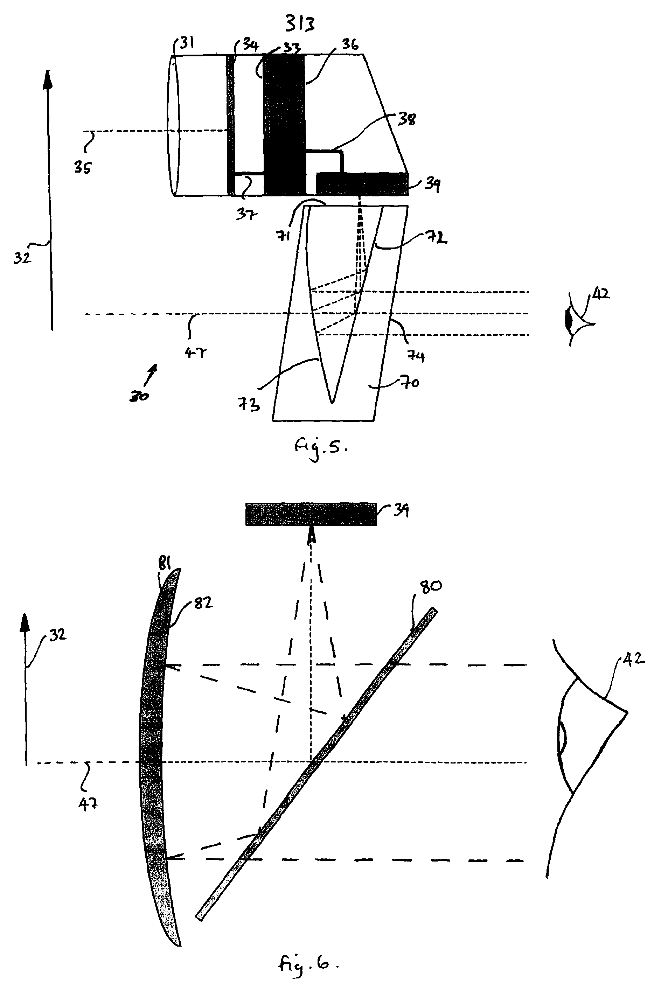

A further alternative embodiment is shown in Figure 6, wherein like references have been used to indicated similar integers to those illustrated in Figures 2, 4 and 5. In this embodiment, the visual image produced by a display 39, which is arranged in a manner to obviate the need of a prism 61 as illustrated in Figure 4, is reflected by a semi-silvered or dielectric coated mirrored surface 80 onto a visor 81 having an internal semi-silvered or dielectric reflective surface 82 arranged to reflect the light of the visual image back to the eye 42 of a user whilst also allowing the eye 42 to view the scene 32 through the mirrored surface 80 and the reflective surface 82 of the visor 81. Again a first optical axis, not illustrated, and the second optical axis 47 are substantially parallel but are not coaxial. In this manner the eye 42 of the user views the scene 32, through the visor 81, and the scene 32 appears to be overlaid with an intensified visual image produced by display 39.

It will be understood that the embodiments as described with reference to Figures 4 to 6 allow the eye 47 of the user to view a scene 32 overlaid with an intensified visual image of the scene 32 whereas the embodiment described in Figure 2 only allows the eye 47 to view an intensified visual image and not the scene 32.

Furthermore, the embodiments in Figures 4 to 6 all have a first optical axis, illustrated in Figures 4 and 5 as reference 35, and a second optical axis 47 that are substantially parallel but are not coaxial. Accordingly, these embodiments can be arranged to be mounted to a helmet using a suitable housing and fixing means. The solid state device and the display can be contained within the housing and can ne spatial fixed with respect to one another. In this manner, the apparatus 30 can be made shorter than is currently possible using prior art image intensifier tubes, thereby reducing the torque produced by the weight of the apparatus 30, when mounted to a helmet, about a neck pivot position of the user of the helmet mounted apparatus..

## Claims

1. Image intensifier apparatus, comprising
a solid state device arranged to receive an image of a scene on an input surface and in operation to produce an intensified signal which represents an intensified image of the scene,
a processor arranged to receive the intensified signal and to produce a visual signal corresponding to the intensified signal, and
a display arranged to receive the visual signal and to produce a visual image representative of the intensified image of the scene.

2. Image intensifier apparatus, comprising
a solid state infrared device arranged to receive an image of a scene on an input surface and in operation to produce a signal which represents an intensified image of the scene,
a processor arranged to receive the signal and to produce a visual signal corresponding to the signal, and
a display arranged to receive the visual signal and to produce a visual image representative of the intensified image of the scene.

3. Image intensifier apparatus, as in Claim 2, wherein the solid state infrared device is a charge coupled infrared device.

4. Image intensifier apparatus, as in Claim 2, wherein an objective lens assembly is arranged to focus the image of the scene along a first optical axis substantially normal to the input surface of the solid state infrared device.

5. Image intensifier apparatus, as in Claims 3 or 4, wherein an eyepiece lens assembly is arranged to convey the visual image to an eye of a user along a second axis.

6. Image intensifier apparatus, as in Claim 5, wherein the first and second optical axes are parallel.

7. Image intensifier apparatus, as in Claims 5 or 6, wherein the first and second optical axes are coaxial.

8. Image intensifier apparatus, as in Claims 2 to 7, wherein the display is a flat panel liquid crystal display.

9. Image intensifier apparatus, as in Claims 2 to 8, wherein the display is arranged to have variable intensity.

10. Image intensifier apparatus, as in Claim 9, wherein the processor is arranged to overlay an information signal over the visual signal.

11. Image intensifier apparatus, as in Claim 10, wherein tracker apparatus are arranged to determine the direction of the first optical axis and to conform the information signal with the visual signal.

12. Image intensifier apparatus, as in Claims 2 to 11, wherein a second display is arranged remote from the solid state infrared device, the processor and the display, and the processor is arranged to transmit the visual signal to the second display.

13. Image intensifier apparatus, as in Claims 2 to 12, wherein a second processor is arranged remote from the solid state infrared device, the processor and the display, the second processor being arranged to transmit an information signal to the processor which is arranged to receive the information signal and overlay the information signal over the visual signal.

14. Image intensifier apparatus, as in Claims 2 to 13, wherein the image intensifier apparatus are arranged to be mounted on to a helmet.

15. Image intensifier apparatus, as in Claims 2 to 14, wherein the scene is a night scene.

16. Image intensifier apparatus, as in Claims 2 to 15, wherein the solid state infrared device is arranged to produce a colour signal, the processor is arranged to produce a colour visual signal and the display is arranged to produce a colour visual image representative of the intensified image of the scene.

17. Image intensifier apparatus, as in Claims 2 to 15, wherein the solid state infrared device is arranged to produce a monochromatic signal, the processor is arranged to produce a synthetic colour visual signal and the display is arranged to produce a colour visual image corresponding to the intensified image of the scene.

18. Image intensifier apparatus, as in Claims 2 to 17, wherein the solid state infrared device and the display are housed in the same unit.

19. Image intensifier apparatus, as in Claim 18, wherein fixing means are arranged to fix the spatial relationship between the solid state infrared device and the display.

20. Image intensifier apparatus substantially as illustrated and/or described with reference to the accompanying drawings.

21. A method of intensifying an image, comprising
receiving an image of a scene on an input surface of a solid state device and producing an intensified signal representing an intensified image of the scene,
producing a corresponding visual signal from the intensified signal, and
receiving the visual signal and producing a visual image representative of the intensified image of the scene on a display.

22. A method of intensifying an image, comprising
receiving an image of a scene on an input surface of a solid state infrared device and producing a signal representing an intensified image of the scene,
producing a corresponding visual signal from the signal, and
receiving the visual signal and producing a visual image representative of the intensified image of the scene on a display.

23. Monocular night vision apparatus for enabling a user to view a scene, comprising
an objective lens assembly arranged to focus an image of the scene along an optical axis through the apparatus,
a solid state infrared device arranged substantially normal to the optical axis and to receive the image on an input surface and in operation to produce a signal which represents an intensified image of the scene,
a processor arranged to receive the signal and to produce a visual signal corresponding to the signal,
a display arranged to receive the visual signal and to produce a visual image representative of the intensified image of the scene, and
an eyepiece lens assembly arranged to convey the visual image to an eye of the user.

24. Binocular night vision apparatus for enabling a user to view a scene, comprising
a pair of optical channels, one for each eye of a user, each channel including an objective lens assembly arranged to focus an image of the scene along an optical axis through the apparatus,
a solid state infrared device arranged substantially normal the optical axis and to receive the image on an input surface and in operation to produce a signal which represents an intensified image of the scene,
a processor arranged to receive the signal from the solid state device and to produce a visual signal corresponding to the signal,
a display arranged to receive the visual signal from the processor and to produce a visual image representative of the intensified image of the scene, and
an eyepiece lens assembly arranged to convey the visual image to its respective eye of the user.

25. A biocular night vision apparatus for enabling a user to view a scene, comprising
an objective lens assembly arranged to focus an image of the scene along an optical axis through the apparatus,
a solid state infrared device arranged substantially normal to the optical axis and to receive the image on an input surface and in operation to produce a signal which represents an intensified image of the scene,
a processor arranged to receive the signal from the solid state device and to produce a visual signal corresponding to the signal,
a display arranged to receive the visual signal from the processor and to produce a visual image representative of the intensified image of the scene, and
a pair of eyepiece assemblies, one for each eye of the user, arranged to convey the visual image to its respective eye of the user.

26. A method of enabling a user to view a night scene, comprising focusing an image of the scene onto an input surface of a solid state device and producing an intensified signal representing the image,
producing a corresponding visual signal from the intensified signal,
receiving the visual signal and producing a visual image representative of the intensified image of the scene on a display, and
conveying the visual image to an eye of the user using an eyepiece lens assembly.

27. A method of enabling a user to view a night scene, comprising focusing an image of the scene onto an input surface of a solid state infrared device and producing a signal representing the image,
producing a corresponding visual signal from the signal,
receiving the visual signal and producing a visual image representative of the intensified image of the scene on a display, and
conveying the visual image to an eye of the user using an eyepiece lens assembly.

28. A method substantially as illustrated and/or described with reference to the accompanying drawings.
